# EUROPEAN PATENT APPLICATION

(11) **EP 4 636 950 A1**
(43) Date of publication of application: **22.10.2025**
(21) Application number: 23903845.8
(22) Date of filing: 30.11.2023
(51) Int. Cl.: H01Q 1/38, H01Q 1/32, H01Q 1/52, H01M 10/42

(54) **ANTENNA-IN-PACKAGE MODULE**

(30) Priority: 13.12.2022 KR 20220174245
(71) Applicant: LG INNOTEK CO., LTD., Seoul 07796 (KR)
(72) Inventor: CHOI, Byung Hyun, Seoul 07796 (KR)
(74) Representative: DREISS Patentanwälte PartG mbB
(86) International application number: PCT/KR2023/019617
(87) International publication number: WO 2024/128642

(57) **Abstract**

An antenna-in-package (AiP) module according to one embodiment of the present invention comprises a substrate, a first chipset embedded in the substrate, a second chipset disposed on the substrate, and a radiating unit electrically connected to the second chipset, wherein the radiating unit is shaped as a cover that covers the substrate.

## Description

### [Technical Field]

The present invention relates to an antenna-in-package (AiP) module, and more particularly, to an AiP module in which one of two chipsets is embedded and which includes a covered antenna.

### [Background Art]

To increase the efficiency of electric vehicles, a battery management system (BMS), which efficiently manages electric vehicle batteries, is mounted on each battery pack.

A wireless battery management system (BMS) is being used to perform inter-BMS communication using wireless communication, rather than using existing wire harnesses to perform inter-BMS communication. In order to perform wireless communication, an antenna must be mounted on a wireless BMS, and there is a problem that the size of a BMS module increases according to the installation of the antenna.

There is a need to develop a module capable of reducing the size of the wireless BMS module.

### [Detailed Description of the Invention]

### [Technical Subject]

The technical problem to be solved by the present invention is to provide an AiP module including a cover-type antenna in which one chipset of two chipsets is embedded and a battery management system including the same.

### [Technical Solution]

In order to solve the above technical problem, an antenna-in-package (AiP) module according to one embodiment of the present invention comprises: a substrate; a first chipset being embedded in the substrate; a second chipset being disposed on the substrate; and a radiating unit being electrically connected to the second chipset, wherein the radiating unit is shaped as a cover that covers the substrate.

In addition, the radiating unit may include a radiating pattern being formed spaced apart from the substrate.

In addition, the radiating unit may include at least one or more support connecting the radiating pattern and the substrate.

In addition, the first chipset includes a battery management IC (BMIC), and the second chipset may include a wireless communication chip.

In addition, the first chipset may be formed in a wafer shape.

In addition, at least a portion of the first chipset and the second chipset may be overlapped with each other in an up-and-down direction of the substrate.

In addition, it may include a shielding layer being disposed in a substrate region in which the first chipset and the second chipset are overlapped with each other.

In addition, it may include a via electrically connecting the second chipset and the ground layer of the substrate.

In addition, the substrate may include a shielding wall being extended in an up-and-down direction along an outer periphery of the first chipset.

In order to solve the above technical problem, a battery management system according to one embodiment of the present invention comprises: a battery pack including a battery cell; a first module being mounted on the battery pack to control the operation of the battery cell and communicate with a battery control unit; and a battery control unit that controls the battery cell through communication with the first module, wherein the first module includes any one among the AiP modules described above.

In addition, the battery pack includes a housing in which a space in which the battery cell is embedded is formed, and the first module can be disposed on a side surface portion of the housing.

In addition, the battery pack includes a plurality of battery packs, and at least two adjacent battery packs among the plurality of battery packs can be disposed so that their upper and lower surfaces face each other.

In addition, the plurality of battery packs may be stacked or disposed while being vertically erected with one side surface of the housing as a bottom surface.

### [Advantageous Effects]

According to embodiments of the present invention, miniaturization is possible compared to existing antenna modules. In addition, material costs can be reduced by using a wafer-type BMIC, and since a metal cutting area is unnecessary through an antenna utilizing a shield can, space can be utilized without additional space on an upper portion of the substrate. Furthermore, space can be reduced when coupled with a battery pack, and a stack structure of the battery pack is possible through the arrangement of the side surface portion.

### [Brief Description of Drawings]

FIG. 1 illustrates an AiP module according to an embodiment of the present invention.
FIG. 2 illustrates an upper surface and a lower surface of an AiP module according to an embodiment of the present invention.
FIG. 3 illustrates an AiP module according to a comparative example of the present invention.
FIG. 4 illustrates an AiP module according to an embodiment of the present invention.
FIG. 5 briefly illustrates a battery management system to which an AiP module according to an embodiment of the present invention is applied.
FIG. 6 illustrates a battery management system according to a comparative example of the present invention.
FIG. 7 and FIG. 8 illustrate battery management systems according to an embodiment of the present invention.

### [BEST MODE]

Hereinafter, preferred embodiments of the present invention will be described in detail with reference to the accompanying drawings.

However, the technical idea of the present invention is not limited to some embodiments to be described, but may be implemented in various forms, and within the scope of the technical idea of the present invention, one or more of the constituent elements may be selectively combined or substituted between embodiments.

In addition, the terms (including technical and scientific terms) used in the embodiments of the present invention, unless explicitly defined and described, can be interpreted as a meaning that can be generally understood by a person skilled in the art, and commonly used terms such as terms defined in the dictionary may be interpreted in consideration of the meaning of the context of the related technology.

In addition, terms used in the present specification are for describing embodiments and are not intended to limit the present invention. In the present specification, the singular form may include the plural form unless specifically stated in the phrase, and when described as "at least one (or more than one) of A and B and C", it may include one or more of all combinations that can be combined with A, B, and C.

In addition, in describing the components of the embodiment of the present invention, terms such as first, second, A, B, (a), and (b) may be used.

These terms are merely intended to distinguish the components from other components, and the terms do not limit the nature, order or sequence of the components.

And, when a component is described as being 'connected', 'coupled' or 'interconnected' to another component, the component is not only directly connected, coupled or interconnected to the other component, but may also include cases of being 'connected', 'coupled', or 'interconnected' due that another component between that other components.

In addition, when described as being formed or disposed in "on (above)" or "below (under)" of each component, "on (above)" or "below (under)" means that it includes not only the case where the two components are directly in contact with, but also the case where one or more other components are formed or disposed between the two components. In addition, when expressed as "on (above)" or "below (under)", the meaning of not only an upward direction but also a downward direction with respect to one component may be included.

A modified embodiment according to the present embodiment may include some components of each embodiment and some components of other embodiments together. That is, the modified embodiment may include one embodiment among various embodiments, but some components may be omitted and some components of the corresponding other embodiment may be included. Or, it may be the opposite. The features, structures, effects, and the like to be described in the embodiments are included in at least one embodiment, and are not necessarily limited to only one embodiment. Furthermore, the features, structures, effects, and the like exemplified in each embodiment may be combined or modified and implemented in other embodiments by a person having ordinary knowledge in the field to which the embodiments belong. Therefore, the contents related to such combinations and modifications should be interpreted as being included in the scope of the embodiment.

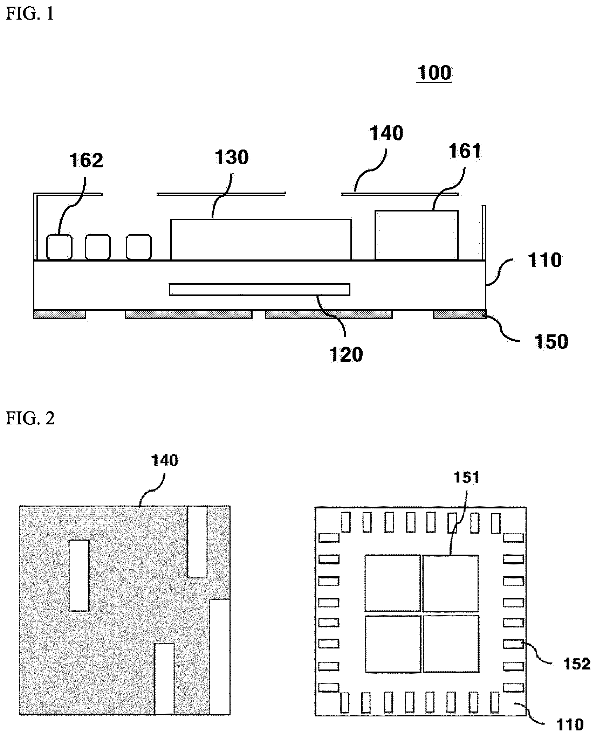

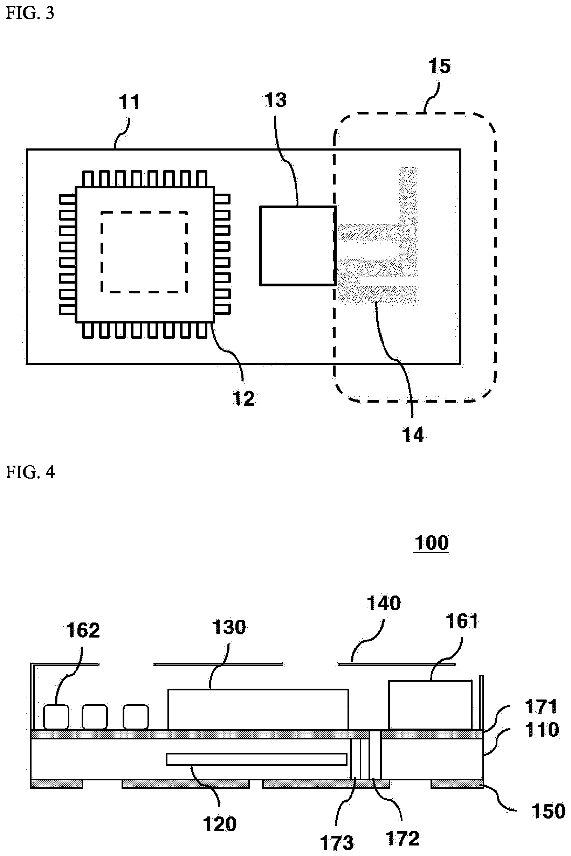

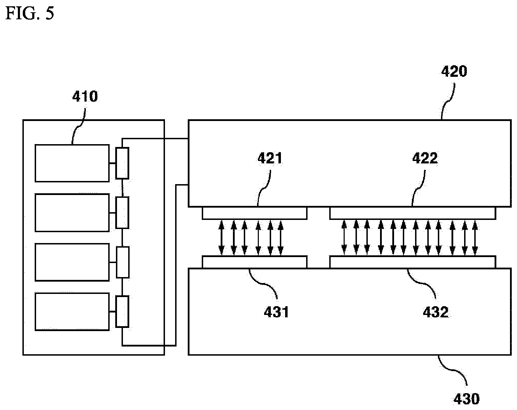

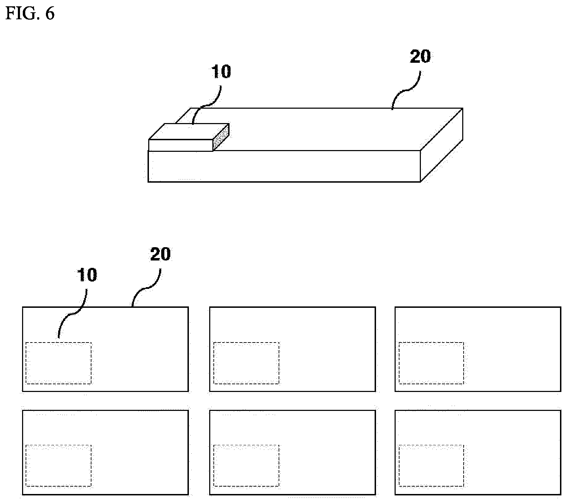

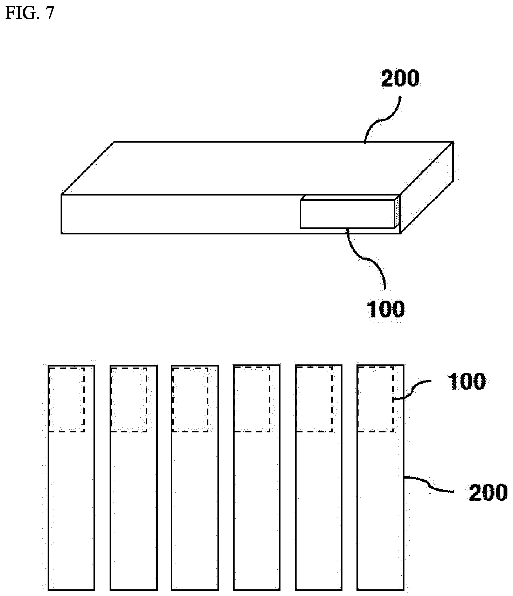

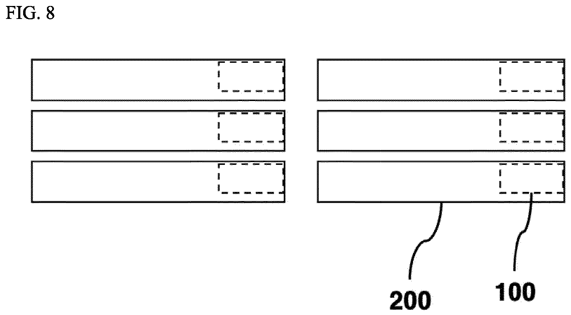

FIG. 1 illustrates an AiP module according to an embodiment of the present invention; FIG. 2 illustrates an upper surface and a lower surface of an AiP module according to an embodiment of the present invention; FIG. 3 illustrates an AiP module according to a comparative example of the present invention; FIG. 4 illustrates an AiP module according to an embodiment of the present invention; FIG. 5 briefly illustrates a battery management system to which an AiP module according to an embodiment of the present invention is applied; FIG. 6 illustrates a battery management system according to a comparative example of the present invention; and FIG. 7 and FIG. 8 illustrate battery management systems according to an embodiment of the present invention.

An AiP module **100** according to one embodiment of the present invention is configured with a substrate **110,** a first chipset **120,** a second chipset **130,** and a radiating unit **140,** and may include a shielding layer **171,** a shielding wall **172,** and a via **173.**

The substrate **110** may be a flat printed circuit board. The substrate **110** may include a plurality of layers. The plurality of layers may be laminated to form one substrate.

The first chipset **120** is embedded within the substrate **110.** The first chipset **120** is embedded by being built into a space within the substrate **110.** A cavity space in which the first chipset **120** can be disposed is formed within the substrate **110,** and the first chipset **120** can be embedded by being disposed within the cavity space. The substrate **110** is configured with a plurality of layers, and the cavity space can be formed within some of the plurality of layers. The first chipset **120** can be embedded by being formed in a wafer shape. Here, the wafer means a circular plate configured with a semiconductor integrated circuit.

The first chipset **120** is disposed in a space inside the substrate, and may be electrically connected to the substrate **110** from above. The first chipset **120** may be electrically connected by making contact with an upper portion of the cavity space, that is, the substrate **110.** The first chipset **120** may be electrically connected to the substrate **110** in a ball grid array (BGA), a pin grid array (PGA), or a land grid array (LGA) manner. In addition, it may be fixed within the cavity space by including one or more support structures being supported within the cavity space.

The second chipset **130** is disposed on the substrate **110.** The second chipset **130** may be disposed on an upper surface of the substrate **110** rather than inside the substrate **110.** The second chipset **130** may be electrically connected to the substrate **110** by soldering. The second chipset **130** may be electrically connected to the substrate **110** in a ball grid array (BGA), a pin grid array (PGA), or a land grid array (LGA) manner.

The first chipset **120** may include a battery management IC (BMIC), and the second chipset **130** may include a wireless communication chip. The first chipset **120** may include a battery management chip that manages battery performance, such as state of health (SOH) and state of storage (SOC), of a battery in a battery pack. Battery management may be performed on one battery cell, or on multiple battery cells. For example, management may be performed on 16 battery cells being connected in series.

The second chipset **130** includes a wireless communication chip, so the first chipset **120** may perform wireless communication for transmitting and receiving data with another battery management system or the outside world. Here, the second chipset **130** may include an RF communication chip. The second chipset **130** may be a 2.4 GHz RF chip or a 5 GHz RF chip. The second chipset **130** may include a wireless communication chip that performs various wireless communications, such as Bluetooth, BLE, and Wi-Fi.

The radiating unit **140** is electrically connected to the second chipset **130.** The radiating unit **140** is electrically connected to the second chipset **130** and radiates a signal transmitted from the second chipset **130.** The radiating unit **140** is formed in a cover shape covering the substrate **110.** The radiating unit **140** is formed as a cover-type antenna and can radiate a signal without a separate space required in the substrate **110.** The radiating unit **140** functions as a shield can and radiates a signal at the same time. For this purpose, the radiating unit **140** can be formed of metal. By being formed of metal, it can protect the elements on the first chipset **120** and the substrate **110** and radiate a signal at the same time. The second chipset **130** can be a 2.4 GHz RF chip, and the radiating unit **140** can be a 2.4 GHz RF antenna.

The radiating unit **140** is formed in a form that covers the upper surface of the substrate **110** by being spaced apart from the upper surface of the substrate **110** by a predetermined distance in order to be formed in a cover shape. The radiating unit **140** may include a feed section that receives a signal from the substrate **110** and a ground section being connected to the ground of the substrate **110** in order to radiate a signal. A signal is inputted by applying current through the feed section, current is outputted to the ground section, and a signal is radiated through the radiating unit **140** that forms a radiation pattern.

The radiation pattern of the radiating unit **140** may be formed in a pattern such as a meander shape or with some areas being empty, as shown in FIG. 2. The resonant frequency may vary depending on the radiation pattern. The radiating unit **140** may include one or more supports being soldered on the substrate **110** to support the radiating unit **140** in order to maintain the shape of the cover. One of the supports is electrically connected to the first chipset **120,** and the other support may be soldered and connected to the substrate **110,** and may be formed to be insulated without being connected to the ground or other configuration.

A grounding portion may be formed on the lower surface of the substrate **110,** as shown in FIG. 2. The radiating unit **140** is connected to an outer periphery of the substrate **110** in the form of a cover, and may be connected to an outer periphery grounding pattern **152** on the lower surface, and the embedded second chipset **130** may be connected to an inner grounding pattern **151.**

The radiating unit **140** is formed in the form of a cover for the substrate **110,** so that it can simultaneously perform the role of a cover for the substrate **110** and the role of radiation. Through this, a separate radiation structure for signal radiation is not required, which is advantageous for miniaturization.

When forming a radiating unit as a pattern antenna **14** on a substrate **11** as in FIG. 3, metal such as copper of the substrate **11** must be cut and removed, and other elements cannot be disposed in the corresponding area, so there are restrictions on space utilization. In addition, when forming a radiating unit, there is a spatial restriction that other elements must not be disposed within a certain interval so that they do not affect radiation. However, by implementing the radiating unit in the form of a cover for the substrate **110,** the spatial restriction can be reduced, and the degree of freedom of design can be increased.

As shown in FIG. 3, when the first chipset **12,** the second chipset **13,** and the radiating unit **14** are all formed on the substrate **11,** the substrate size increases and it becomes difficult to utilize the space where the radiating unit **1** is formed. In order to miniaturize, the first chipset **120** can be embedded inside the substrate **110** and the second chipset **130** can be disposed at an upper portion of the substrate to reduce the size of the substrate **110.** The first chipset **120** and the second chipset **130** can be overlapped with at least partially in a vertical direction of the substrate **110.** The first chipset **120** and the second chipset **130** can be overlapped with each other while being aligned in a vertical direction of the substrate **110,** and can be disposed so that at least partially overlapped with each other to reduce the size of the substrate **110.** Areas where a lot of frequency interference occurs can also be disposed so as not to be overlapped with each other.

At this time, the shielding units **171** and **172** shield the first chipset **120.** The first chipset **120** is embedded inside the substrate **110,** and the second chipset **130** is disposed on the substrate **110** so that they can affect each other. When the first chipset **120** and the second chipset **130** operate simultaneously, it may be difficult to secure performance due to noise and frequency interference. The shielding unit shields the first chipset **120** to reduce noise and frequency interference between the first chipset **120** and the second chipset **130,** thereby securing performance.

The shielding unit may include a shielding layer **171** disposed in a substrate area where the first chipset **120** and the second chipset **130** are overlapped with each other between the first chipset **120** and the second chipset **130.** The first chipset **120** and the second chipset **130** are overlapped with each other with the substrate **110** being interposed therebetween and face each other, and thus frequency interference may occur at a position where they are overlapped and face each other. To prevent this, the shielding layer **171** being disposed in a substrate area where the first chipset **120** and the second chipset **130** are overlapped with each other may be included. The shielding layer **171** may be laminated on an upper portion of the substrate **110** in a flat shape. Or, it may be laminated inside the substrate **110.** At this time, one of the multiple layers forming the substrate **110** may be formed as the shielding layer **171.** The shielding layer **171** includes a non-magnetic material and may include an insulating layer.

The shielding unit may include a ground layer **150** being laminated to a lower portion of the substrate **110.** By including the ground layer **150** to a lower portion of the substrate **110,** a ground layer for shielding may be formed. The ground layer **150** may form a ground (GND). The ground layer **150** may be laminated to a lower portion of the substrate **110** in a planar shape. Or, it may be laminated inside the substrate **110.** At this time, one of the multiple layers forming the substrate **110** may be formed as the ground layer **150.**

Here, a via **173** electrically connecting the shielding layer **171** and the ground layer **150** of the substrate may be included. The via **173** may electrically connect the shielding layer **171** and the ground layer **150** by penetrating the substrate **110.** The first chipset **120** or the second chipset **130** may be electrically connected to the ground layer **150** through the shielding layer **171** and the via **173.**

In the case of including a shielding layer **171,** a ground layer **150,** and a via **173** connecting the shielding layer **171** and the ground layer **150,** the shielding performance can exhibit a shielding performance of -17 dB and a performance of -40 A/m² in S-current, compared to the case of not including the shielding layer.

The shielding unit may include a shielding wall **172** being extended in an up-and-down direction of the substrate **110** along an outer periphery of the first chipset **120.** As shown in FIG. 4, the shielding wall **172** may be extended in an up-and-down direction of the substrate **110** to divide the substrate **110** into an inner region of the shielding wall **172** and an outer region of the shielding wall **172.** The shielding wall **172** may be formed along the outer peripheral shape of the first chipset **122** in order to shield the first chipset **120.** The shielding wall **172** may be formed by cutting and removing a portion of the substrate **110.** The shielding wall **172** may be formed by cutting and removing the inside of the substrate, that is, the metal portion of each layer. Each layer of the substrate **110** may be coated with a metal such as copper, and the coated metal may be removed at a predetermined gap to form a shielding wall **172.** At this time, the thickness of the shielding wall **172** may be 0.1 mm.

By forming a shielding layer **171** that shields the first chipset **120** from top to bottom as well as a shielding wall **172** that shields the first chipset **120** from left to right, noise and frequency interference between the first chipset **120** and the second chipset **130** can be minimized.

The shielding wall **172** may be disposed spaced apart from an outer periphery of the first chipset **120,** and a via **173** may be disposed between the first chipset **120** and the shielding wall **172.** Even if the shielding layer **171** is formed, frequency interference may occur at a location of the via **173,** so the via **173** may be disposed between the first chipset **120** and the shielding wall **172** so that the shielding wall **172** is disposed outside the via **173.**

The shielding wall **172** can be extended from an upper portion of the substrate **110** to an upper portion of the ground layer **150** being laminated to a lower portion of the substrate. The shielding wall **172** can be extended to the shielding layer **171,** so that the shielding layer **171** can also be divided into an inner region and an outer region of the shielding wall **172.** Or, the shielding layer **171** can be formed only in an inner region of the shielding wall **172.**

The shielding performance of a communication module including a shielding layer **171,** a ground layer **150,** a via **173** connecting the shielding layer **171** and the ground layer **150,** and a shielding wall **172** can exhibit a shielding performance of -27 dB in the near field and a performance of -50 A/m² in the S-current.

On an upper portion of the substrate **110,** peripheral components **161** and **162** of the chipset may be disposed in an area where the second chipset **130** is not disposed. The components include at least one of an active component **161** or a passive component **162,** and some of them may be embedded inside the substrate **110.** The components **161** may be disposed in an external area of the substrate **110** along the shielding wall **172.** Through this, influence with the first chipset **120** may be minimized.

The shielding wall **172** is extended from an upper portion of the substrate **110** to the ground layer **150,** and divides the shielding layer **171** or the upper portion of the substrate **110** into an inner region and an outer region. That is, the inner region and the outer region are separated in an upper portion of the substrate **110,** so that it may be difficult to transmit and receive signals with other elements **180** or the outside. The via **173** may form a bypass path for transmitting and receiving signals, including a via in an inner region of the shielding wall and a via in an outer region of the shielding wall. The first chipset **120** or the second chipset **130** is electrically connected to one of the multiple layers of the shielding layer **171** or the substrate **110,** and is electrically connected to the ground layer **150** through a via in an inner region of the shielding wall, and is electrically connected to the via in an outer region of the shielding wall through the ground layer **150,** and is electrically connected to the element **161** or the outside, so as to transmit and receive signals.

Through this, the space for two chipsets can be efficiently secured, and shielding performance can be enhanced by forming a shielding layer and shielding wall that shield the chipset being embedded inside the substrate.

The AiP module **100** according to an embodiment of the present invention can be applied to a battery pack **410** of a battery management system as shown in FIG. 5. Each battery pack **410** includes a BMIC for wireless BMS and a 2.4 GHz RF integrated embedded AiP module, so that wireless communication can be performed between BMS modules. The battery management system can be configured with a battery pack array, a battery junction box (BJB) **420,** and a battery control unit (BCU) **430,** and the BJB **420** and the BCU **430** can transmit and receive data through highspeed communication interfaces **421** and **431** and low-speed communication interfaces **422** and **432,** and each BMIC for wireless BMS and the 2.4 GHz RF integrated embedded AiP module **410** can perform wireless communication through 2.4 GHz RF communication.

A battery management system according to one embodiment of the present invention may include an AiP module to perform wireless communication between BMSs. A detailed description of the AiP module for a wireless BMS for a vehicle corresponds to the detailed description of the AiP module of FIGS. 1 to 5, and thus, any overlapping description will be omitted below.

A battery management system according to an embodiment of the present invention includes a battery pack **200,** an AiP module **100,** and a battery control unit **430.** The battery pack **200** includes at least one battery cell, and the AiP module **100** is mounted on the battery pack **200** to control the operation of the battery cell and communicate with the battery control unit **430.** The battery control unit **430** controls the battery cell through communication with the AiP module **100.**

Here, the battery pack **200** includes a housing in which a space in which the battery cell is embedded is formed, and the AiP module **100** can be disposed on a side surface portion of the housing.

The AiP module **10** implemented as in FIG. 3 is difficult to mount on a side surface of the battery pack, and can be mounted on a wide first surface of the battery pack **20,** as in FIG. 6. Since the radiating unit **14** cannot be disposed to be overlapped with another battery pack for wireless communication, multiple battery packs can only be disposed in a planar form, as in FIG. 6.

The AiP module **100** according to an embodiment of the present invention can be miniaturized and thus can be disposed on a side surface of a battery pack **200.**

The battery pack **200** includes a plurality of battery packs, and at least two adjacent battery packs among the plurality of battery packs may be disposed so that their upper and lower surfaces face each other. In addition, the plurality of battery packs may be stacked or disposed while being vertically erected with one side surface of the housing as a bottom surface.

That is, as shown in FIG. 7, by arranging the AiP module **100** on a side surface of the battery pack **200,** the battery pack can be disposed while being vertically erected or, as shown in FIG. 8, a stack structure in which multiple battery packs are stacked can be disposed. In particular, when multiple battery packs are used for a high-capacity battery, various arrangements are possible, thereby increasing the freedom of design and utilizing space efficiently.

An AiP module comprises a substrate, a first chipset being embedded in the substrate, a second chipset being disposed on the substrate, and a radiating unit being electrically connected to the second chipset, wherein the radiating unit is formed in the form of a cover covering the substrate. In addition, the radiating unit may include a radiating pattern being formed spaced apart from the substrate, the radiating unit may include at least one or more supports connecting the radiating pattern and the substrate, the first chipset may include a battery management IC (BMIC), the second chipset may include a wireless communication chip, the first chipset may be formed in a wafer shape, the first chipset and the second chipset may be overlapped with each other at least partially in an up-and-down direction of the substrate, a shielding layer being disposed in a substrate area where the first chipset and the second chipset are overlapped with each other, a via electrically connecting the second chipset and a ground layer of the substrate may be included, and a shielding wall being extended in an up-and-down direction of the substrate along an outer periphery of the first chipset may be included.

Through this: miniaturization is possible compared to existing antenna modules; material costs can be reduced by using a wafer-type BMIC; the antenna utilizing a shield can eliminates the need for a metal cutting area, thereby allowing space to be utilized without additional space on the top of the substrate; space can be reduced when coupled with a battery pack; and a stack structure of the battery pack is possible through the arrangement of the side surface portion.

The features, structures, effects, and the like described in the embodiments above are included in at least one embodiment and are not necessarily limited to only one embodiment. Furthermore, the features, structures, effects, and the like illustrated in each embodiment can be combined or modified and implemented in other embodiments by a person with ordinary knowledge in the field to which the embodiments belong. Therefore, contents related to such combinations and modifications should be interpreted as being included in the scope of the embodiments.

Those skilled in the art related to the present embodiment will understand that the above-described description can be implemented in a modified form without departing from the essential characteristics thereof. Therefore, the disclosed methods should be considered from an illustrative rather than a restrictive perspective. The scope of the present invention is indicated by the claims, not the above description, and all differences within the scope equivalent thereto should be interpreted as being included in the present invention.

## Claims

1. An AiP Antenna in Package module comprising:
a substrate;
a first chipset embedded in the substrate;
a second chipset disposed on the substrate; and
a radiating unit electrically connected to the second chipset,
wherein the radiating unit is shaped as a cover that covers the substrate.

2. The AiP module according to claim 1,
wherein the radiating unit comprises a radiating pattern formed spaced apart from the substrate.

3. The AiP module according to claim 2, comprising:
at least one or more supporting unit connecting the radiating pattern and the substrate.

4. The AiP module according to claim 1,
wherein the first chipset comprises a battery management IC (BMIC), and
wherein the second chipset comprises a wireless communication chip.

5. The AiP module according to claim 1,
wherein the first chipset is formed in a wafer shape.

6. The AiP module according to claim 1,
wherein at least a portion of the first chipset and the second chipset are overlapped with each other in an up-and-down direction of the substrate.

7. The AiP module according to claim 6, comprising:
a shield layer disposed in the region of the substrate in which the first chipset and the second chipset are overlapped with each other.

8. The AiP module according to claim 7, comprising:
a via electrically connecting the second chipset and a ground layer of the substrate.

9. The AiP module according to claim 1, comprising:
a shield wall extended in an up-and-down direction of the substrate along an outer periphery of the first chipset.

10. A battery management system comprising:
a battery pack comprising a battery cell;
a first module mounted on the battery pack to control operation of the battery cell and communicate with a battery control unit; and
a battery control unit configured to control the battery cell through communication with the first module,
wherein the first module comprises AiP module of any one claim among claims 1 to 9.
